# EUROPEAN PATENT SPECIFICATION

(11) **EP 3 547 146 B1**
(45) Date of publication and mention of the grant of the patent: **04.08.2021**
(21) Application number: 19160052.7
(22) Date of filing: 28.02.2019
(51) Int. Cl.: G06F 12/0831

(54) **SYSTEM, METHOD, AND APPARATUS FOR DETECTING REPETITIVE DATA ACCESSES AND AUTOMATICALLY LOADING DATA INTO LOCAL CACHE**
SYSTEM, VERFAHREN UND VORRICHTUNG ZUR DETEKTION VON REPETITIVEN DATENZUGRIFFEN UND AUTOMATISCHES LADEN VON DATEN IN LOKALEN CACHE-SPEICHER
SYSTÈME, PROCÉDÉ ET APPAREIL DE DÉTECTION D'ACCÈS DE DONNÉES RÉPÉTITIFS ET DE CHARGEMENT AUTOMATIQUE DE DONNÉES DANS UNE MÉMOIRE CACHE LOCALE

(30) Priority: 29.03.2018 US 201815940719
(43) Date of publication of application: 02.10.2019
(73) Proprietor: INTEL Corporation, Santa Clara, CA 95054 (US)
(72) Inventor: KRISHNAN, Venkata, Ashland, Massachusetts 01721 (US); STEWART, Lawrence, Wayland, Massachusetts 01778 (US); VASUDEVAN, Anil, Portland, Oregon 97229 (US); WANG, Ren, Portland, Oregon 97229 (US)
(74) Representative: Samson & Partner Patentanwälte mbB

(56) References cited:
- JP-A- 2000 347 933
- US-A1- 2016 092 366
- US-A1- 2016 357 664

## Description

### TECHNICAL FIELD

Embodiments of the invention described herein relate generally to the field of processing logic, microprocessors, and associated instruction set architecture that, when executed by the processor or other processing logic, perform logical, mathematical, or other functional operations. In particular, the disclosure relates to efficient data movement operations between processor cores.

### BACKGROUND ART

Modern multi-core processors typically include multi-level cache hierarchy and coherence protocols that are intended to bring data closer to processing core(s), hoping to reduce latency by taking advantage of temporal and/or spatial locality in subsequent accesses. By storing data in caches, performance is improved when subsequent accesses reuse the same data (temporal locality) or reference nearby data (spatial locality) as previous accesses. To avoid conflicts, elaborate coherence protocols are often used to keep data consistent between the cores. In some cases, however, these coherence protocols unintentionally cause data that is shared between a producer core and a consumer core to bounce around between them, which reduces data locality and thereby decreases performance. For example, the coherence protocol may unnecessarily transfer the ownership of a cache line containing the data from the producer to the consumer when in fact, it is only the data that needs to be transferred. By changing ownership of the cache line, its locality with respect to the producer is altered. This change not only causes a performance degradation in subsequent accesses of the data by the producer, but also incurs additional penalties in power consumption, connection bandwidth, and cache space.

US2016/092366 A1 discloses a multicore processor wherein each core has an associated L1 cache. A cache controller has a snoop filter to ensure cache coherency. MESI, MOESI or MESIF protocols are implemented. Hence this document discloses a method of data movement operations comprising: storing a cache line in a first cache of a first processor, the cache line associated with a cache coherence state indicating that the first cache has sole ownership of the cache line ("Exclusive state"); copying the cache line to be stored into a second cache of a second processor, and changing the cache coherence state of the cache line in the first cache to shared ("Shared state").

### SUMMARY

The invention is set out in the appended set of claims. The dependent claims set out particular embodiments.

### BRIEF DESCRIPTION OF THE DRAWINGS

The invention may best be understood by referring to the following description and accompanying drawings that are used to illustrate embodiments of the invention. In the drawings:
FIGS. 1A-1B illustrate the underlying interactions in a typical producer/consumer data exchange between two processors using a read/load instruction;
FIGS. 2A-2B illustrate the underlying interactions in a producer/consumer data exchange between two processors when a read snapshot (snapshot) instruction is used in accordance to an embodiment;
FIGS. 3A-3B illustrate the underlying interactions in a producer/consumer data exchange between a processor and main memory when a read snapshot (snapshot) instruction is used according to an embodiment;
FIG. 4 is a block diagram illustrating an exemplary system on which embodiments of the present invention may be implemented;
FIG. 5 is a block diagram illustrating an embodiment of a predictor;
FIG. 6 is a block diagram illustrating a table implemented by a predictor for determining repetitive data access patterns in accordance to an embodiment;
FIG. 7 is a flow diagram illustrating a method embodiment for remedying performance inversions caused by incorrect and repetitive usage of the snapshot instruction to access data;
FIG. 8 is a flow chart illustrating the operations and logic for implementing a predictor according to an embodiment;
FIG. 9 is a flow chart illustrating additional operations and logic for implementing the predictor according to an embodiment;
FIG. 10A is a block diagram illustrating both an exemplary in-order pipeline and an exemplary register renaming, out-of-order issue/execution pipeline according to embodiments of the invention;
FIG. 10B is a block diagram illustrating both an exemplary embodiment of an in-order architecture core and an exemplary register renaming, out-of-order issue/execution architecture core to be included in a processor according to embodiments of the invention;
FIG. 11 is a block diagram of a single core processor and a multicore processor with integrated memory controller and graphics according to embodiments of the invention;
FIG. 12 illustrates a block diagram of a system in accordance with one embodiment of the present invention;
FIG. 13 illustrates a block diagram of a second system in accordance with an embodiment of the present invention;
FIG. 14 illustrates a block diagram of a third system in accordance with an embodiment of the present invention;
FIG. 15 illustrates a block diagram of a system on a chip (SoC) in accordance with an embodiment of the present invention; and
FIG. 16 illustrates a block diagram contrasting the use of a software instruction converter to convert binary instructions in a source instruction set to binary instructions in a target instruction set according to embodiments of the invention.

### DETAILED DESCRIPTION

Embodiments of system, method, and processor for detecting repetitive data accesses made by read snapshot instructions and responsively loading data into the local cache are described herein. In the following description, numerous specific details are set forth to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments. For clarity, individual components in the Figures herein may be referred to by their labels in the Figures, rather than by a particular reference number.

Data movement services between producers and consumers (e.g., cores in a processor) move copies of data between them through read and write operations. For optimal performance, producers and consumers save copies of the data in their local caches based on locality considerations. As producers and consumers update and seek data, these locality considerations are altered. For example, in some coherent memory architectures, the act of reading or updating data changes the data's coherence state and position in a cache hierarchy. In other situations, the messaging system running on a single cache-coherent node (e.g., a processor) performs unintended transfer of the producer's cache line ownership to the consumer, when in fact, it is only the data that needed to be transferred. These changes in locality consideration not only degrade performance, but also consume power, coherency bandwidth, and cache space.

To address performance degradations due to unnecessary and/or unintended data movements, a read snapshot instruction, or snapshot instruction for short, was realized. The snapshot instruction is a specialized data movement instruction that moves a copy of the requested data from the source to the destination without altering the cache state or the directory state anywhere within the cache-coherent domain. The data being returned by the snapshot instruction is a snapshot of the content at the memory address specified by the snapshot instruction at the time when the read is performed. When executed, the snapshot instruction allows data to be read or sourced in situ with respect to the caching hierarchy and coherency. For example, a consumer, by executing a snapshot instruction, can read data from a producer without causing a change in the coherence state and/or the location of the cache line containing the data. The performance benefits of the snapshot instruction is two-fold. First, because the snapshot instruction does not cache the data into the consumer's cache, it does not displace data whose absence from the consumer's cache would reduce performance (i.e. reduce capacity misses). Second, because the snapshot instruction does not change the cache coherence state of the original cache line, a producer having write access to the original cache line will not lose that access and thus does not have to pay the cost of reacquiring access in future writes (i.e., read-for-ownership cost).

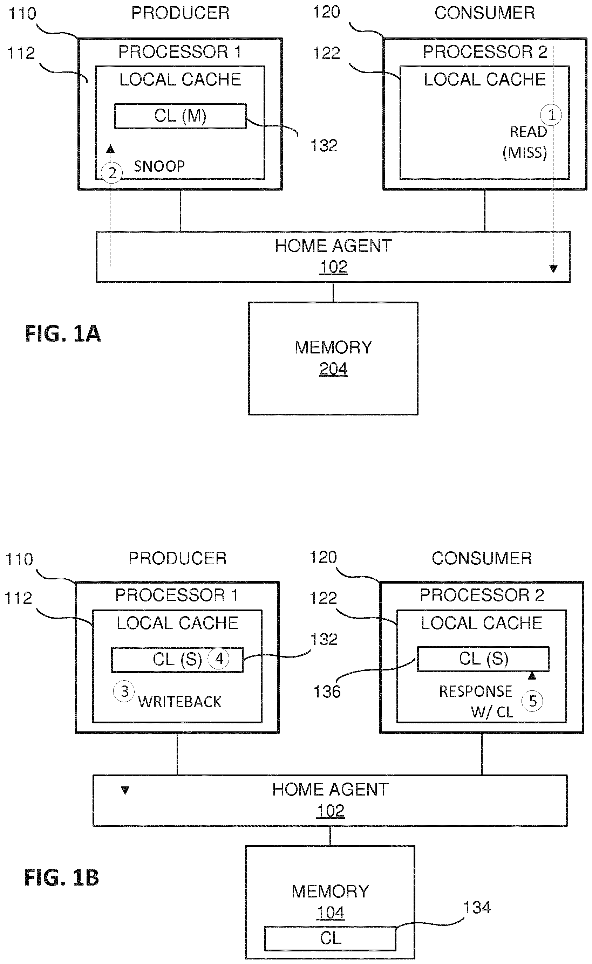

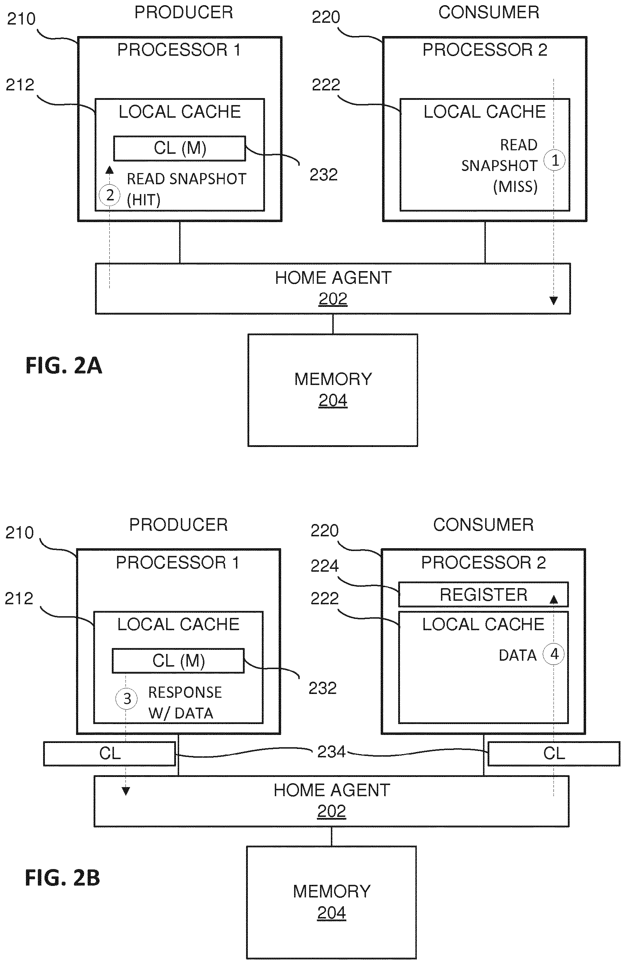

A typical producer/consumer data exchange using a read/load instruction is illustrated in Figures 1A-1B. In contrast, an exchange using the snapshot instruction is shown in Figures 2A-2B. The producer and consumer shown in these figures may be logical or physical processors, threads, and cores in a multi-threaded/multi-core processor. Moreover, for simplicity, a single local cache is illustrated for each producer and consumer. However, while not illustrated, additional levels of local cache may also be implemented. Some of the local caches may be shared between the producer and the consumer.

Referring to Figure 1A. At initial state, a cache line (CL) 132 is stored in the local cache 112 of processor 1 110 (i.e. the producer). The cache line 132 is associated with a cache coherence state of modified (M) or exclusive (E), indicating that processor 1's local cache 112 has sole ownership of the only valid instance of cache line 132. Thereafter, processor 2 120 (i.e. the consumer) seeks to read the data contained in cache line 132 by issuing and/or executing a read/load instruction. However, since the only valid instance of cache line 132 resides in the local cache 112 of processor 1 110, the read by processor 2 120 misses its local cache 122. This is illustrated by operation 1 (i.e. 1 enclosed by circle). In response to the miss, the home agent 102 issues a snoop request for cache line 132 to processor 1 110, as illustrated by operation 2. The home agent 102 may include or have access to a directory that tracks ownership and/or status of each cache line cached by processers 1 and 2. Next, as illustrated by Figure 1B, if cache line 132 in the local cache 112 of processor 1 110 is in modified (M) state and thus "dirty," cache line 132 is written back to memory 104 as cache line 134 via a writeback (i.e., operation 3). Additionally, the coherence state of cache line 132 in local cache 112 of processor 1 110 is changed from modified (M) to shared (S), as illustrated by operation 4. On the other hand, if the state of the requested cache line 132 was exclusive (E) instead of modified (M), no writeback required. Instead, the coherence state of the requested cache line 132 is simply changed from exclusive (E) to shared (S).

In any case, a copy of cache line 132 is provided to processor 2 120 in operation 5, via a response to processor 2's read miss. This copy of cache line 132 is saved into the local cache 122 as cache line copy 136 and marked as (S)hared. To summarize, as a result of the read issued by processor 2 120, the cache coherence state of cache line 132 in producer's local cache 112 is changed (e.g., M → S or E → S), and a copy of the cache line 136 is cached into the consumer's local cache 122.

In contrast, Figures 2A and 2B illustrate the underlying interactions when a snapshot instruction is used instead of a read/load instruction. At initial state, similar to that of Figure 1A, a cache line (CL) 232 is stored in the local cache 212 of processor 1 210 (i.e., the producer). The cache line 232 is associated with a cache coherence state of modified (M) or exclusive (E), indicating that processor 1's local cache 212 has sole ownership of the only valid instance of cache line 232. Thereafter, processor 2 220 (i.e., the consumer) seeks to read the data contained in cache line 232 by executing a snapshot instruction. The snapshot instruction may specify the memory address of cache line 232 and a location to which a response is to be stored. The execution of the snapshot instruction may trigger one or more snapshot requests or operations. Again, since the only valid instance of cache line 232 resides in the local cache 212 of processor 1210, the snapshot request issued by processor 2 220 misses its local cache 222. This is illustrated by operation 1. Subsequent to the miss, home agent 202 may forward the snapshot request and/or issues a snoop to processor 1 210. In some embodiments, the request or snoop to processor 1 210 includes a hint indicating that only the data from the cache line is requested. Next, as shown in Figure 2B, responsive to the request, processor 1 210 sends a cache line copy 234 to the home agent 202 in operation 3. The home agent 202, in turn, sends the cache line copy 234 to processor 2 220 in operation 4. Alternatively, the cache line copy (i.e., data) may be sent directly from processor 1 210 to processor 2 220 without going through home agent 202. The cache line copy 234 is then stored directly into processor 2's register 224 to be consumed. No change is made to the cache coherence state or location of the original cache line 232. In other words, cache line 232 still resides in the local cache 212 of processor 1 210 and maintains its cache coherence state (e.g., modified (M) or exclusive (E)), after execution of the snapshot instruction by processor 2 220.

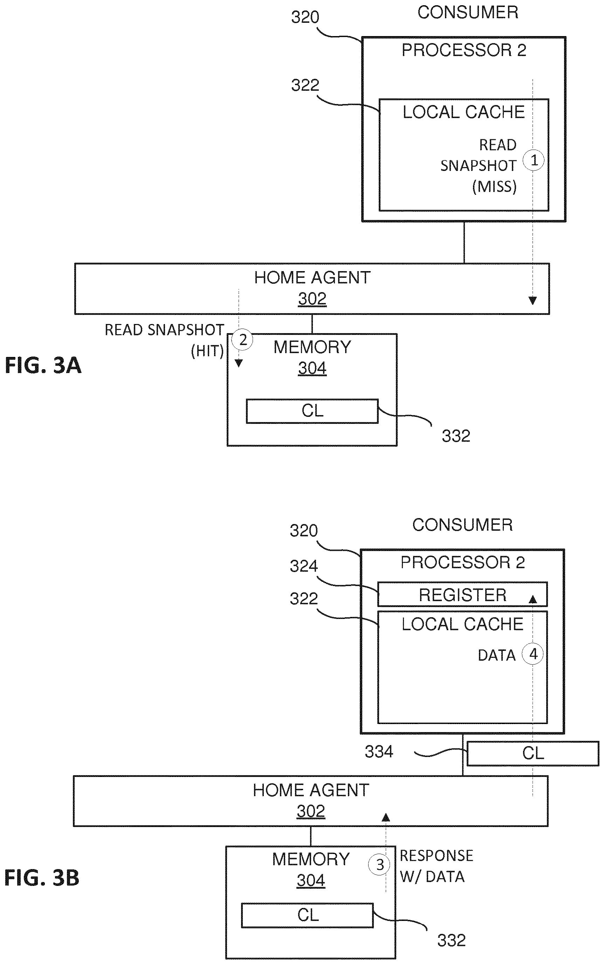

When used appropriately, the snapshot instruction can significantly reduce performance penalties incurred from unnecessary cache line bouncing between the producer and consumer caused by cache coherence protocols. However, in some scenarios, due to factors such as programming error, misunderstanding of usage, and/or inability to access an underlying library, the snapshot instruction is used repetitively to read the same cache line over and over again. In these cases, the cumulative cost of the cross-core accesses, such as those illustrated in Figures 2A-2B, can easily outweigh any performance benefits gained by the use of snapshot instructions over the more conventional read/load instructions. The situation is even worse when the requested cache line is stored in the main memory rather than the cache of another processor or processor core, due to the higher latency associated with memory accesses. Figures 3A-3B illustrates an example of accessing cache lines in the main memory. In Figure 3A, processor 2 320 executes a snapshot instruction requesting for cache line 332. In this example, the only valid instance of cache line 332 is in the main memory 304. As such, the snapshot request results in a miss in processor 2's local cache 322. Next, responsive to the miss, the home agent 302 issues or forwards the snapshot request to the main memory 304, as illustrated by operation 2. In response, as illustrated in Figure 3B, a snapshot (i.e., data) of cache line 332 is returned from the main memory 304 in operation 3. That data is stored directly into processor 2's register 324 to be consumed without being cached into the local cache 322. Thereafter, if processor 2 320 needs to access the data in cache line 332 again, the same access would have to be repeated.

In general, the snapshot instruction should be called only in situations where it provides performance benefits over a conventional read/load instruction. As mentioned above, when incorrectly used, repeat executions of the snapshot instruction to access data can negate most, if not all, of the benefits sought to be provided by the snapshot instruction in the first place. As such, aspects of the present invention are directed to minimize the occurrences of such performance inversion by proactively detecting repetitive accesses made by the incorrect use of the snapshot instructions and responsively storing the data into a local cache so that it can be used to satisfy future accesses. A subsequent snapshot instruction to read the same data would be filled with the data cached in the local cache. According to an embodiment, a requested cache line is allocated and stored into the local cache as a result of a snapshot instruction upon: 1) the detection of a repetitive access pattern to the same data, and/or 2) the occurrence of an event having a predetermined probability, such as the expiration of a timer or a randomly generated number matching a pre-selected number.

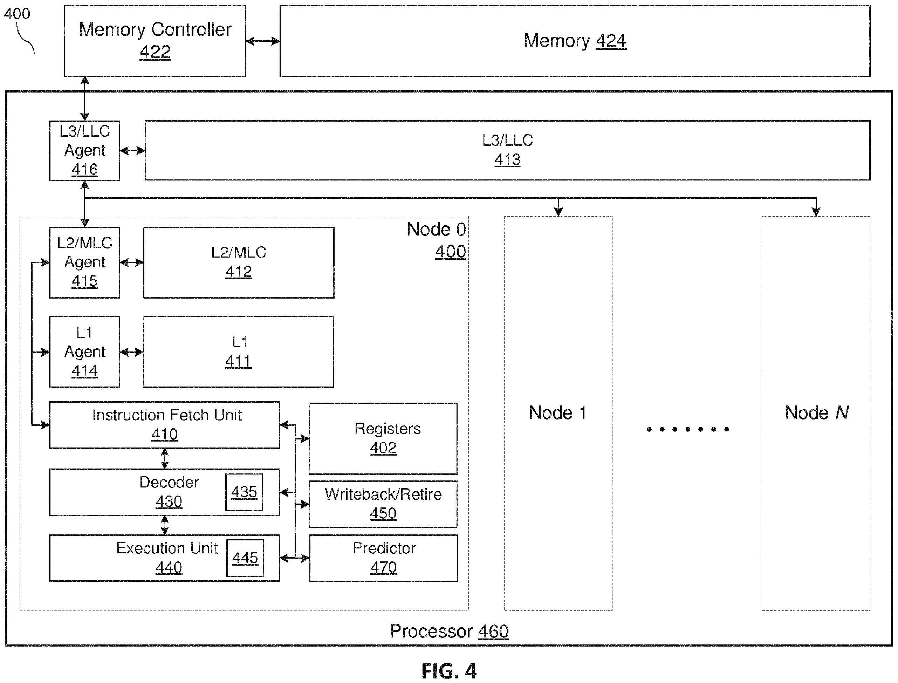

Figure 4 illustrates an embodiment of an exemplary system in detail. System 400 includes processor 460 that is communicatively coupled to memory 424. Processor 460 may be a chip multi-processor (CMP) that includes one or more nodes. Each of the nodes may constitute or include: a processor core (core), a logical processor, or a hardware thread. The details of a single node (i.e., node 0) are illustrated in Figures 4 for simplicity. It will be understood, however, that each of the other nodes may have the same set of logic, components, circuitry, and/or configuration as node 0. For example, each node may include a set of registers 402, a level 1 cache (L1) 411, and a L2 (L2) or mid-level cache (MLC) 412. In some embodiments, processor 460 may further includes a level 3 (L3) cache or LLC 413 that is communicatively coupled to, and shared by, all the nodes. In other embodiments (not shown), the L3/LLC 413 is physically distributed and logically shared among the nodes. Each of LI, L2/MLC, and L3/LLC caches, according to an embodiment, is managed by a respective cache agent or controller (414-416) and usable for caching instructions and data according to a specified cache management policy. One or more cache agents or controllers may be used to perform the functions of a home agent, which may utilize directories to ensure and enforce cache coherence. In at least some embodiments, the cache management policy further includes a cache eviction/replacement policy. The instructions and data stored within the various processor caches are managed at the granularity of cache lines which may be a fixed size (e.g., 64, 128, 512 Bytes in length). Each node of the exemplary embodiments further includes an instruction fetch unit 410 for fetching instructions from main memory 424 via memory controller 422 and/or from the shared LLC 413 via L3/LLC agent 416; a decoder 430 for decoding the instructions (e.g., decoding program instructions into micro-operations or "uops"); an execution unit 440 for executing the decoded instructions; and a writeback unit 450 for retiring the instructions and writing back the results (e.g., to main memory 424). Furthermore, decoder 430 may include specific logic or circuitry to decode snapshot instructions into micro-operations such as snapshot operations. Similarly, the execution unit may also include specific logic or circuitry to execute the decoded snapshot instructions by performing various operations. The snapshot instruction may include one or more operand. At least one of the operands may specify the memory address of a cache line from which data is to be read.

According to an embodiment, processor 460 also includes one or more predictors (e.g., predictor 470) to track the data access pattern of each node by monitoring the execution of snapshot instructions within each node. While each node, as illustrated by Figure 4, may include its own predictor, in alternative embodiments, a centralized predictor (not illustrated) may monitor and track the execution of snapshot instructions for of the all nodes within processor 460.

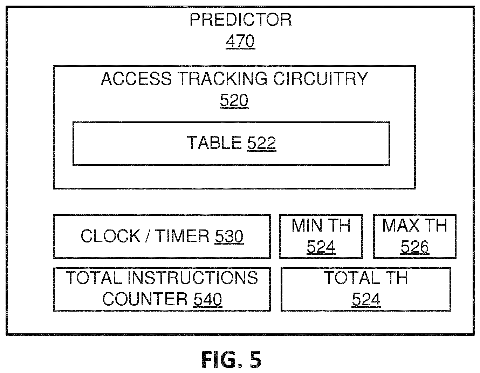

Figure 5 illustrates an embodiment of a predictor. The predictor 470 may be implemented by software program, hardware logic/circuitry, or a combination of both. In one embodiment, the predictor 470 further includes access tracking logic/circuitry 520 and clock/timer logic/circuitry 530. A table 525 may be implemented by the access tracking logic/circuitry 520 to track cache line accesses made via the snapshot instruction by a corresponding processor. The predictor may also include a minimum threshold 524 and a maximum threshold 526 for comparing with the counters of each cache line that are tracked to determine repetitive access patterns. In one embodiment, when a snapshot instruction is issued by the processor, its source address is check against the table. When the source address is found in the table, the access counter corresponding to the source address is increased by 1. To phase out stale entries, the access counters of all tracked source addresses may be periodically decreased by 1 until they reach the minimum threshold and is then deleted. When the access counter of a certain address exceeds the maximum threshold, the behavior of the snapshot instruction is altered. The predictor may also include a total instructions counter 540 to keep a running total of all of the snapshot instructions executed by the corresponding processor within a certain time period. A totals threshold 524 may be used to compare with the total instructions counter 540. When the total instruction counter exceeds the total threshold, the behavior of the snapshot instruction may be altered.

The behavior of the snapshot instruction may be altered in several ways. A load operation may be enabled or performed in addition to, or instead of, the snapshot instruction. In one embodiment, the load operation copies the requested cache line into the local cache (e.g., L1 or L2 cache) of the requesting core. According another embodiment, in addition to the requested cache line being copied into the local cache, it is indicated as the least-recently used (LRU) cache line such that the requested cache line is more likely to be evicted from the local cache than other cache lines in the same cache. In another embodiment, the load operation causes the issuance of a prefetch instruction which specifies the cache level into which the requested cache line is to be stored.

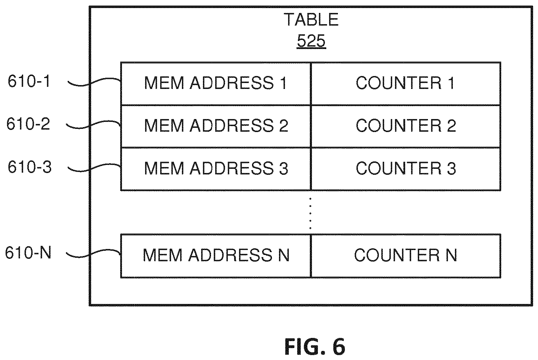

Figure 6 illustrates an embodiment of a table for tracking the cache lines that have been accessed by a consumer via executions of the snapshot instruction by the consumer. Table 525 includes one or more table entries 610-1∼610-N each of which corresponds to a cache line that has been accessed by the consumer via the snapshot instruction. Each of the table entries includes a memory address field (i.e. memory address 1-N) to store the memory address of the accessed cache line and a counter (i.e. counter 1-N) to track the number accesses that have been made.

One of the difficulties in implementing a table to track repetitive accesses to cache lines is allocating sufficient resources for the table to capture enough accesses for determining a pattern. Generally, smaller tables, while being faster and cheaper to implement, are less effective than large ones. Sparse and yet repetitive accesses may not be easily detected when a small table is used. For example, a program may cycle repetitively through a large number of memory addresses such that the time and/or number of other accesses in between two repetitive accesses can be very large. Consequently, a small table may not be able to track enough accesses for determining a repetitive pattern because a previous access may have already been evicted from the table before the next access to the same location is recorded. For this reason, a randomized "competitive" behavior is used in addition to, or instead of, the table approach. According to an embodiment, upon detecting the issuance of a snapshot instruction, the predictor may make a random choice on whether modify the behavior of the snapshot instruction. In one embodiment, the behavior of the snapshot is modified by enabling and/or performing a load operation to bring the data into a processor's local cache.

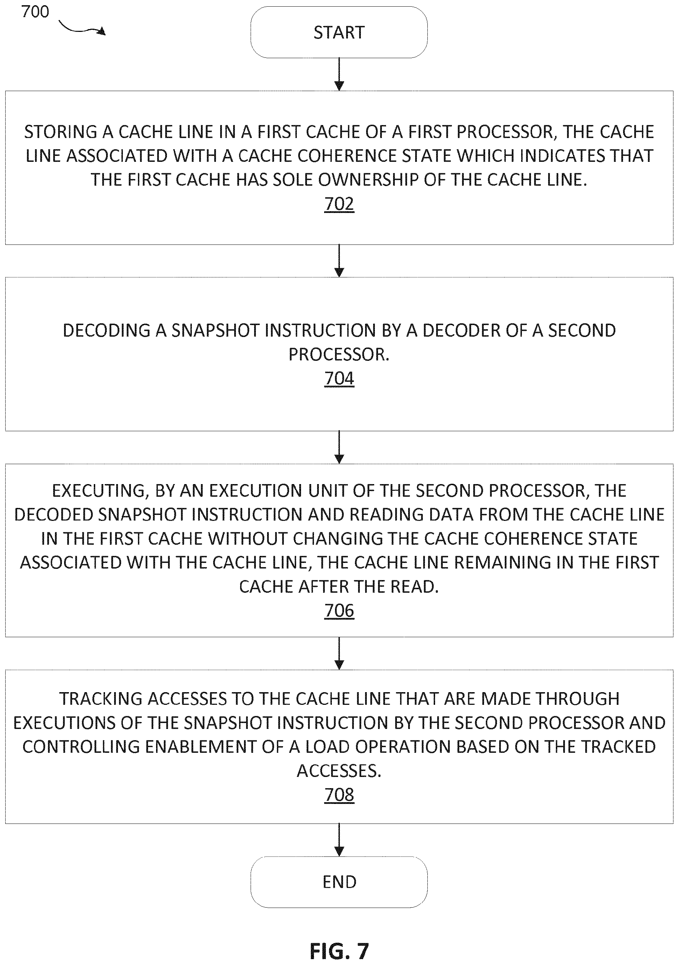

Figure 7 is a flow diagram illustrating a method embodiment for reducing performance inversions caused by incorrect and repetitive usage of the snapshot instruction to access data. The method 7000 may be implemented in, for example, the system illustrated in Figure 4, as well as any other suitable architecture. Method 700 includes, at block 702, storing a cache line in a first cache of a first processor. The cache line is associated with a cache coherence state, such as (M)odified or (E)xclusive, to indicate that the first cache has sole ownership of the cache line. Having sole ownership also means that the first cache has the only valid instance of the cache line within a cache coherent domain. Method 700 further includes, at block 704, decoding a snapshot instruction by a decoder of a second processor. The snapshot instruction may include an operand specifying the memory address of the cache line. At block 706, the method further includes executing, by an execution unit of the second processor, the decoded snapshot instruction and reading data form the cache line in the first cache line without changing the cache coherence state associated with the cache line. The cache line is to remain in the first cache after the data is read. At block 708, the method 700 includes tracking accesses to the cache line that are made through executions of the snapshot instruction by the second processor and controlling enablement of a load operation based on the tracked accesses. According to an embodiment, the load operation causes a copy of the cache line to be stored into the local cache of the second processor and the coherence state of the cache line is set as (S)hared.

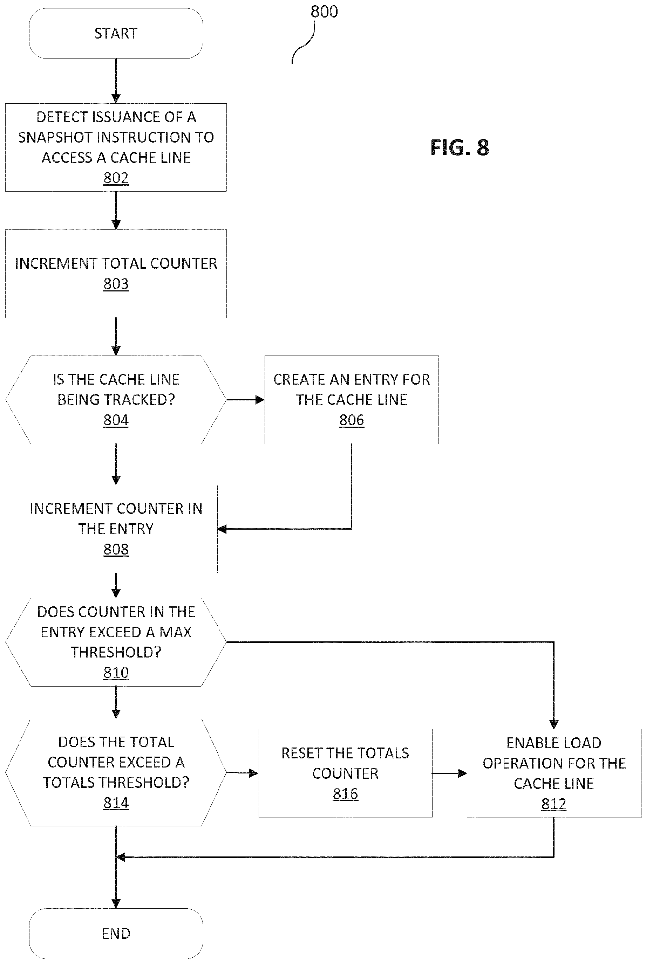

Figure 8 is a flow chart illustrating the operations and logic 800 for implementing a predictor according to an embodiment. At block 802, the predictor (e.g., 470 from Figures 4 and 5), which is associated with a requesting processor (i.e., consumer), detects issuance of a snapshot instruction by the requesting processor to access a cache line. The requested cache line may be located in the local cache of another processor or in the main memory. In one embodiment, the issuance is detected by the hardware predictor monitoring the decoder and/or the execution unit of the associated processor for the decoding and execution, respectively, of the snapshot instruction. In another embodiment, the hardware predictor monitors the messaging system between the requesting processor and other processors or the main memory for data request operations corresponding to snapshot instructions.

In response to the detection, at block 803, a total instructions counter (total counter) for tracking the total number of detected snapshot instruction is incremented. At block 804, a determination is made on whether the requested cache line is already being tracked by the predictor. This may be performed by a table lookup of the memory address of the cache line. If the cache line is not currently being tracked, an entry corresponding to the cache line is created in the table at block 806 for tracking accesses to that cache line. Each of the entries in the table may include an address field to store the memory address of the cache line being tracked, and a counter to track the number of accesses to the cache line made via a snapshot instruction issued by the requesting processor. To minimize the cost of implementation, the table may be implemented as a hash table in which the memory address of each tracked cache line is hashed to determine the corresponding entry for that cache line. When a hash table is used, multiple cache lines may be tracked by a single hash table entry.

At block 808, the counter in the entry corresponding to cache line is incremented to reflect the access. At block 810, a determination is made on whether the counter, as the result of the increment, exceeds a max threshold. If the max threshold is exceeded by the counter, a load operation is enabled at block 812. According to an embodiment, enabling the load operations means performing the load operation by storing the requested cache line into a local cache of the requesting processor and updating the cache coherence state of any instances of the cache line in the cache coherent domain to (S)hared. The load operation may be performed in addition to, or instead of, the snapshot instruction. If it is determined at block 810 that the max threshold has not been exceeded by the counter as a result of the increment, another determination is made, at block 814, on whether the totals counter exceeded a totals threshold. If the totals threshold has been exceeded, the totals counter is reset at block 816 and the load operation is enabled at block 812. If the totals threshold has not been exceeded, the method ends.

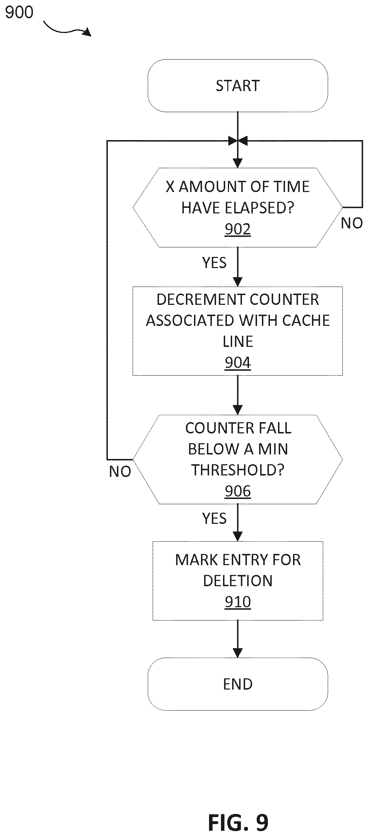

Figure 9 is a flow chart illustrating additional operations and logic for implementing the predictor according to an embodiment. The illustrated operations and logic, 900, may be implemented independently or conjunction with the operation and logic illustrated in Figure 8. At block 902, the predictor determines whether a predetermined amount of time has passed since the creation of an entry for a cache line that is the target of a snapshot instruction. The amount of time passed since the creation of the entry for the target cache line may be determined based on a clock or a timer. If the predetermined amount of time has not passed, no action is taken and the predictor continues to monitor the clock or timer. On the other hand, if a predetermined amount time has indeed passed, the predictor decrements the counter in a table entry associated with the said cache line. At block 906, the predictor determines whether or not the counter falls below a minimum threshold as a result of the decrement. If the minimum threshold has not been crossed by the counter, no further action is taken. If, however, the counter does fall below a minimum threshold, then at block 910, the entry corresponding to the target cache line is deleted or marked for deletion.

An example of the present invention is a system that includes a main memory and a first processor that is communicatively coupled to the main memory and includes a first cache to store a cache line. This cache line may be associated with a cache coherence state indicating that the first cache has sole ownership of the cache line. The system further includes a second processor that is also communicatively coupled to the main memory and includes a second cache. The second processor may further include a decoder configured to decode a snapshot instruction that specifies the memory address of the cache line stored in the first cache, and an execution unit configured to execute the decoded snapshot instruction and to read data from the cache line stored in the first cache without changing the cache coherence state associated with the cache line or its location, such that the cache line is to remain in the first cache after the read. Additionally, the system includes predictor circuitry configured to track accesses to the cache line by monitoring executions of the snapshot instruction by the execution unit of the second processor. The predictor circuitry may further be configured to control enablement of a load operation based on the tracked accesses, such that an enablement of the load operation is to cause 1) a copy of the cache line to be stored into the second cache and 2) the cache coherence state of the cache line in the first cache to be changed to shared. The system may include a table to track accesses to the cache line, such that a table entry corresponding the cache line is operable to store a count of a number of accesses to the cache line made by the second processor via its execution of the snapshot instruction. The count may be incremented each time the cache line is accessed by the second processor via an execution of the snapshot instruction and may be decremented each time a predetermined amount of time has passed. The predictor circuitry may be configured to enable the load operation when the count exceeds a first threshold or when a certain number of snapshot instructions have been executed by the second processor. The predictor may also be configured to delete the table entry corresponding to the cache line when the count in the table entry falls below a second threshold. The table may be a hash table so that the memory address of the cache line is hashed in order to determine the corresponding table entry for the cache line. The enablement of the load operation may cause a copy of the cache line to be stored into the second cache as a least recently used (LRU) cache line so that it is more likely to be evicted from the second cache than other stored cache lines. The enablement of the load operation may also cause issuance of a prefetch instruction which specifies the cache level into which a copy of the cache line is to be stored. The execution of that prefetch instruction may cause a copy of the cache line to be stored into the specified cache level.

Another example of the present invention is a method that includes storing a cache line in a first cache of a first processor. The cache line may be associated with a cache coherence state indicating that the first cache has sole ownership of the cache line. The method also includes tracking accesses to the cache line by monitoring executions of a snapshot instruction made by a second processor. The snapshot instruction may specify a memory address of the cache line and an execution of the snapshot instruction may cause the second processor to read data from the cache line stored in the first cache without changing the cache coherence state associated with the cache line, and that the cache line is to remain in the first cache after the read. The method further includes controlling enablement of a load operation based on the tracked accesses, such that an enablement of the load operation is to cause 1) a copy of the cache line to be stored into a second cache of the second processor, and 2) the cache coherence state of the cache line in the first cache to be changed to shared. In addition, the method may include using a table to track accesses to the cache line, such that a table entry corresponding the cache line is to store a count of a number of accesses to the cache line made by the first processor via its executions of the snapshot instruction. The method may also include incrementing the count each time the cache line is accessed by the second processor via its execution of the snapshot instruction, and enabling the load operation when the count exceeds a first threshold and/or when a certain number of snapshot instructions have been executed by the second processor. Additionally, the method may include decrementing the count each time a predetermined amount of time has passed and deleting the table entry corresponding to the cache line when the count falls below a second threshold. Furthermore, the method may include hashing the memory address of the cache line to determine the corresponding table entry for the cache line. The method also may include storing the copy of the cache line into the second cache as least recently used (LRU) so that the copy of the cache line is more likely to be evicted from the second cache than other cache lines in the second cache. The method may include issuing a prefetch instruction which specifies a cache level into which the copy of the cache line is to be stored, and executing that prefetch instruction to store the copy of the cache line into the specified cache level.

Yet another example of the present invention is an apparatus, such as a processor, that includes a first processor core, a second processor core, and predictor circuitry. The first processor includes a first cache to store a cache line which is associated with a cache coherence state indicating that the first cache has sole ownership of the cache line. The second processor includes a second cache, a decoder configured to decode a snapshot instruction which specifies a memory address of the cache line, and an execution unit configured to execute the decoded snapshot instruction and to read data from the cache line stored in the first cache, without changing the cache coherence state associated with the cache line or its location, such that the cache line is to remain in the first cache after the read. The predictor circuitry may be configured to track accesses to the cache line by monitoring executions of the snapshot instruction by the execution unit of the second processor. The predictor circuitry may also be configured to control enablement of a load operation based on the tracked accesses, such that an enablement of the load operation is to cause 1) a copy of the cache line to be stored into the second cache and 2) the cache coherence state of the cache line in the first cache to be changed to shared. The apparatus may include a table to track accesses to the cache line, such that a table entry corresponding the cache line is operable to store a count of a number of accesses to the cache line made by the second processor via its execution of the snapshot instruction. The count may be incremented each time the cache line is accessed by the second processor via an execution of the snapshot instruction and may be decremented each time a predetermined amount of time has passed. The predictor circuitry may be configured to enable the load operation when the count exceeds a first threshold or when a certain number of snapshot instructions have been executed by the second processor. The predictor may also be configured to delete the table entry corresponding to the cache line when the count in the table entry falls below a second threshold. The table may be a hash table so that the memory address of the cache line is hashed in order to determine the corresponding table entry for the cache line. The enablement of the load operation may cause a copy of the cache line to be stored into the second cache as a least recently used (LRU) cache line so that it is more likely to be evicted from the second cache than other stored cache lines. The enablement of the load operation may also cause issuance of a prefetch instruction which specifies the cache level into which a copy of the cache line is to be stored. The execution of that prefetch instruction may cause a copy of the cache line to be stored into the specified cache level.

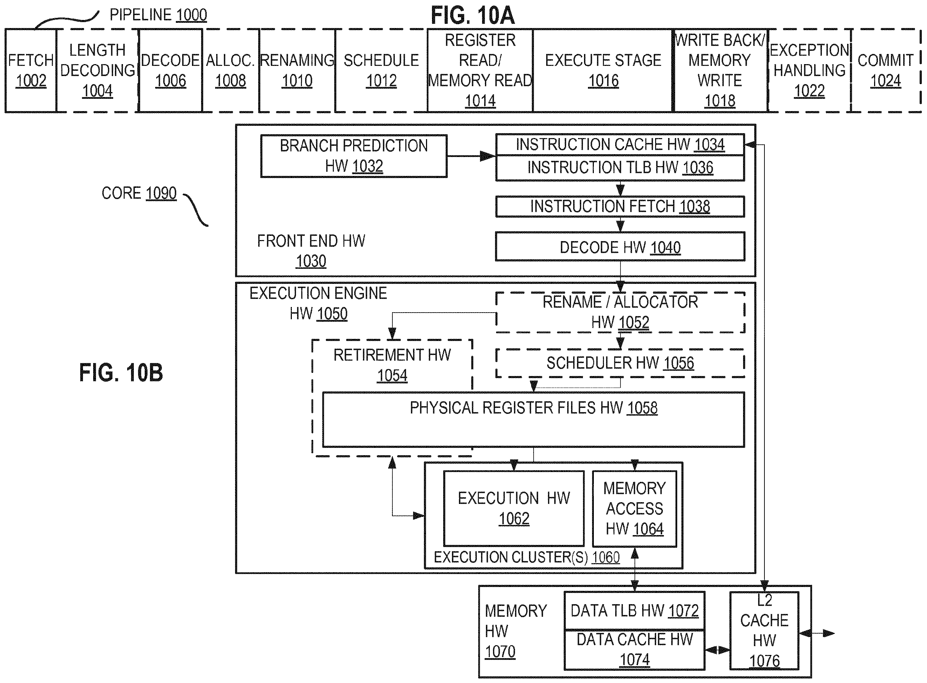

**Figure 10A** is a block diagram illustrating both an exemplary in-order pipeline and an exemplary register renaming, out-of-order issue/execution pipeline according to embodiments of the invention. Figure 10B is a block diagram illustrating both an exemplary embodiment of an in-order architecture core and an exemplary register renaming, out-of-order issue/execution architecture core to be included in a processor according to embodiments of the invention. The solid lined boxes in Figures 10A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In Figure 10A, a processor pipeline 1000 includes a fetch stage 1002, a length decode stage 1004, a decode stage 1006, an allocation stage 1008, a renaming stage 1010, a scheduling (also known as a dispatch or issue) stage 1012, a register read/memory read stage 1014, an execute stage 1016, a write back/memory write stage 1018, an exception handling stage 1022, and a commit stage 1024.

**Figure 10B** shows processor core 1090 including a front end hardware 1030 coupled to an execution engine hardware 1050, and both are coupled to a memory hardware 1070. The core 1090 may be a reduced instruction set computing (RISC) core, a complex instruction set computing (CISC) core, a very long instruction word (VLIW) core, or a hybrid or alternative core type. As yet another option, the core 1090 may be a special-purpose core, such as, for example, a network or communication core, compression engine, coprocessor core, general purpose computing graphics processing unit (GPGPU) core, graphics core, or the like.

The front end hardware 1030 includes a branch prediction hardware 1032 coupled to an instruction cache hardware 1034, which is coupled to an instruction translation lookaside buffer (TLB) 1036, which is coupled to an instruction fetch hardware 1038, which is coupled to a decode hardware 1040. The decode hardware 1040 (or decoder) may decode instructions, and generate as an output one or more micro-operations, micro-code entry points, microinstructions, other instructions, or other control signals, which are decoded from, or which otherwise reflect, or are derived from, the original instructions. The decode hardware 1040 may be implemented using various different mechanisms. Examples of suitable mechanisms include, but are not limited to, look-up tables, hardware implementations, programmable logic arrays (PLAs), microcode read only memories (ROMs), etc. In one embodiment, the core 1090 includes a microcode ROM or other medium that stores microcode for certain macroinstructions (e.g., in decode hardware 1040 or otherwise within the front end hardware 1030). The decode hardware 1040 is coupled to a rename/allocator hardware 1052 in the execution engine hardware 1050.

The execution engine hardware 1050 includes the rename/allocator hardware 1052 coupled to a retirement hardware 1054 and a set of one or more scheduler hardware 1056. The scheduler hardware 1056 represents any number of different schedulers, including reservations stations, central instruction window, etc. The scheduler hardware 1056 is coupled to the physical register file(s) hardware 1058. Each of the physical register file(s) hardware 1058 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical register file(s) hardware 1058 comprises a vector registers hardware, a write mask registers hardware, and a scalar registers hardware. This register hardware may provide architectural vector registers, vector mask registers, and general purpose registers. The physical register file(s) hardware 1058 is overlapped by the retirement hardware 1054 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement hardware 1054 and the physical register file(s) hardware 1058 are coupled to the execution cluster(s) 1060. The execution cluster(s) 1060 includes a set of one or more execution hardware 1062 and a set of one or more memory access hardware 1064. The execution hardware 1062 may perform various operations (e.g., shifts, addition, subtraction, multiplication) and on various types of data (e.g., scalar floating point, packed integer, packed floating point, vector integer, vector floating point). While some embodiments may include a number of execution hardware dedicated to specific functions or sets of functions, other embodiments may include only one execution hardware or multiple execution hardware that all perform all functions. The scheduler hardware 1056, physical register file(s) hardware 1058, and execution cluster(s) 1060 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler hardware, physical register file(s) hardware, and/or execution cluster - and in the case of a separate memory access pipeline, certain embodiments are implemented in which only the execution cluster of this pipeline has the memory access hardware 1064). It should also be understood that where separate pipelines are used, one or more of these pipelines may be out-of-order issue/execution and the rest in-order.

The set of memory access hardware 1064 is coupled to the memory hardware 1070, which includes a data TLB hardware 1072 coupled to a data cache hardware 1074 coupled to a level 2 (L2) cache hardware 1076. In one exemplary embodiment, the memory access hardware 1064 may include a load hardware, a store address hardware, and a store data hardware, each of which is coupled to the data TLB hardware 1072 in the memory hardware 1070. The instruction cache hardware 1034 is further coupled to a level 2 (L2) cache hardware 1076 in the memory hardware 1070. The L2 cache hardware 1076 is coupled to one or more other levels of cache and eventually to a main memory.

By way of example, the exemplary register renaming, out-of-order issue/execution core architecture may implement the pipeline 1000 as follows: 1) the instruction fetch 1038 performs the fetch and length decoding stages 1002 and 1004; 2) the decode hardware 1040 performs the decode stage 1006; 3) the rename/allocator hardware 1052 performs the allocation stage 1008 and renaming stage 1010; 4) the scheduler hardware 1056 performs the schedule stage 1012; 5) the physical register file(s) hardware 1058 and the memory hardware 1070 perform the register read/memory read stage 1014; the execution cluster 1060 perform the execute stage 1016; 6) the memory hardware 1070 and the physical register file(s) hardware 1058 perform the write back/memory write stage 1018; 7) various hardware may be involved in the exception handling stage 1022; and 8) the retirement hardware 1054 and the physical register file(s) hardware 1058 perform the commit stage 1024.

The core 1090 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 1090 includes logic to support a packed data instruction set extension (e.g., AVX1, AVX2, and/or some form of the generic vector friendly instruction format (U=0 and/or U=1), described below), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyperthreading technology).

While register renaming is described in the context of out-of-order execution, it should be understood that register renaming may be used in an in-order architecture. While the illustrated embodiment of the processor also includes separate instruction and data cache hardware 1034/1074 and a shared L2 cache hardware 1076, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

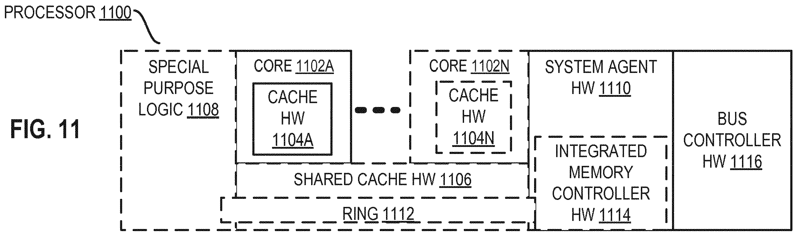

**Figure 11** is a block diagram of a processor 1100 that may have more than one core, may have an integrated memory controller, and may have integrated graphics according to embodiments of the invention. The solid lined boxes in Figure 11 illustrate a processor 1100 with a single core 1102A, a system agent 1110, a set of one or more bus controller hardware 1116, while the optional addition of the dashed lined boxes illustrates an alternative processor 1100 with multiple cores 1102A-N, a set of one or more integrated memory controller hardware 1114 in the system agent hardware 1110, and special purpose logic 1108.

Thus, different implementations of the processor 1100 may include: 1) a CPU with the special purpose logic 1108 being integrated graphics and/or scientific (throughput) logic (which may include one or more cores), and the cores 1102A-N being one or more general purpose cores (e.g., general purpose in-order cores, general purpose out-of-order cores, a combination of the two); 2) a coprocessor with the cores 1102A-N being a large number of special purpose cores intended primarily for graphics and/or scientific (throughput); and 3) a coprocessor with the cores 1102A-N being a large number of general purpose in-order cores. Thus, the processor 1100 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 1100 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache hardware 1106, and external memory (not shown) coupled to the set of integrated memory controller hardware 1114. The set of shared cache hardware 1106 may include one or more mid-level caches, such as level 2 (L2), level 3 (L3), level 4 (L4), or other levels of cache, a last level cache (LLC), and/or combinations thereof. While in one embodiment a ring based interconnect hardware 1112 interconnects the integrated graphics logic 1108, the set of shared cache hardware 1106, and the system agent hardware 1110/integrated memory controller hardware 1114, alternative embodiments may use any number of well-known techniques for interconnecting such hardware. In one embodiment, coherency is maintained between one or more cache hardware 1106 and cores 1102-A-N.

In some embodiments, one or more of the cores 1102A-N are capable of multithreading. The system agent 1110 includes those components coordinating and operating cores 1102A-N. The system agent hardware 1110 may include for example a power control unit (PCU) and a display hardware. The PCU may be or include logic and components needed for regulating the power state of the cores 1102A-N and the integrated graphics logic 1108. The display hardware is for driving one or more externally connected displays.

The cores 1102A-N may be homogenous or heterogeneous in terms of architecture instruction set; that is, two or more of the cores 1102A-N may be capable of execution the same instruction set, while others may be capable of executing only a subset of that instruction set or a different instruction set. In one embodiment, the cores 1102A-N are heterogeneous and include both the "small" cores and "big" cores described below.

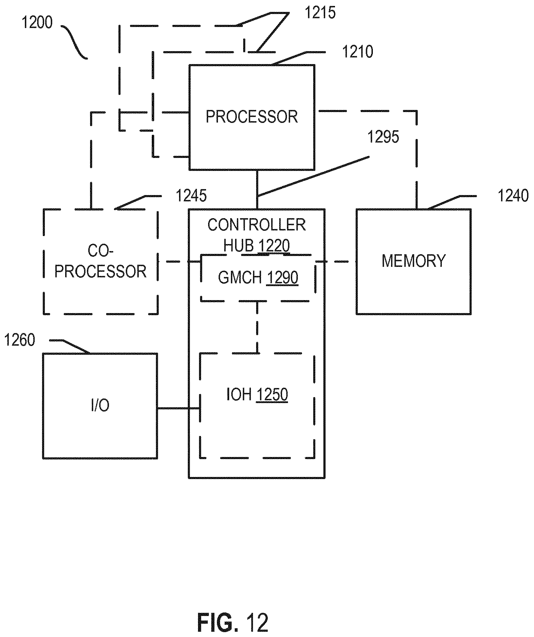

Figures 12-15 are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to **Figure 12****,** shown is a block diagram of a system 1200 in accordance with one embodiment of the present invention. The system 1200 may include one or more processors 1210, 1215, which are coupled to a controller hub 1220. In one embodiment the controller hub 1220 includes a graphics memory controller hub (GMCH) 1290 and an Input/Output Hub (IOH) 1250 (which may be on separate chips); the GMCH 1290 includes memory and graphics controllers to which are coupled memory 1240 and a coprocessor 1245; the IOH 1250 is couples input/output (I/O) devices 1260 to the GMCH 1290. Alternatively, one or both of the memory and graphics controllers are integrated within the processor (as described herein), the memory 1240 and the coprocessor 1245 are coupled directly to the processor 1210, and the controller hub 1220 in a single chip with the IOH 1250.

The optional nature of additional processors 1215 is denoted in Figure 12 with broken lines. Each processor 1210, 1215 may include one or more of the processing cores described herein and may be some version of the processor 1100.

The memory 1240 may be, for example, dynamic random access memory (DRAM), phase change memory (PCM), or a combination of the two. For at least one embodiment, the controller hub 1220 communicates with the processor(s) 1210, 1215 via a multi-drop bus, such as a frontside bus (FSB), point-to-point interface, or similar connection 1295.

In one embodiment, the coprocessor 1245 is a special-purpose processor, such as, for example, a high-throughput MIC processor, a network or communication processor, compression engine, graphics processor, GPGPU, embedded processor, or the like. In one embodiment, controller hub 1220 may include an integrated graphics accelerator.

There can be a variety of differences between the physical resources 1210, 1215 in terms of a spectrum of metrics of merit including architectural, microarchitectural, thermal, power consumption characteristics, and the like.

In one embodiment, the processor 1210 executes instructions that control data processing operations of a general type. Embedded within the instructions may be coprocessor instructions. The processor 1210 recognizes these coprocessor instructions as being of a type that should be executed by the attached coprocessor 1245. Accordingly, the processor 1210 issues these coprocessor instructions (or control signals representing coprocessor instructions) on a coprocessor bus or other interconnect, to coprocessor 1245. Coprocessor(s) 1245 accept and execute the received coprocessor instructions.

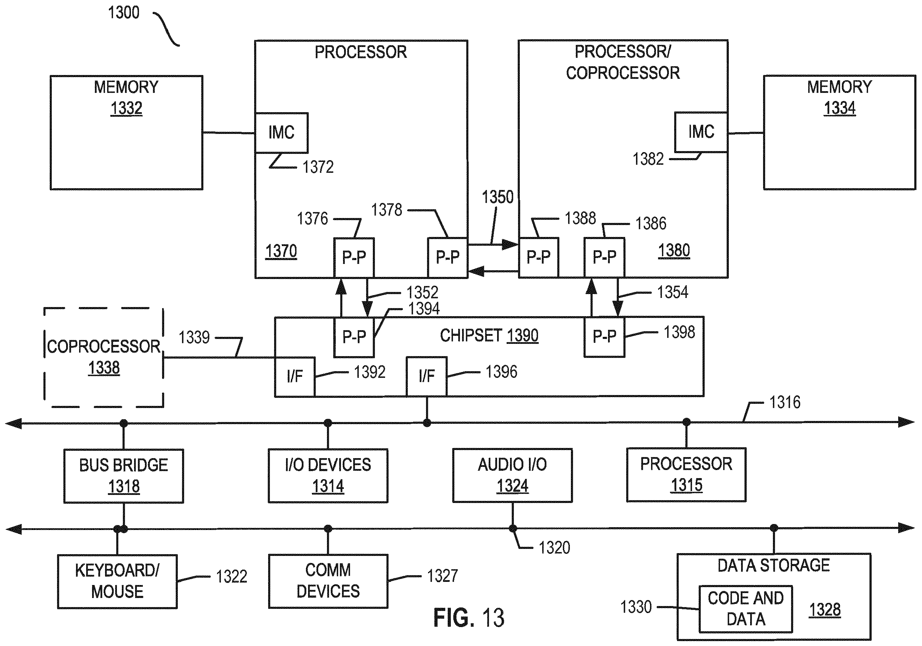

Referring now to **Figure 13****,** shown is a block diagram of a first more specific exemplary system 1300 in accordance with an embodiment of the present invention. As shown in Figure 13, multiprocessor system 1300 is a point-to-point interconnect system, and includes a first processor 1370 and a second processor 1380 coupled via a point-to-point interconnect 1350. Each of processors 1370 and 1380 may be some version of the processor 1100. In one embodiment of the invention, processors 1370 and 1380 are respectively processors 1210 and 1215, while coprocessor 1338 is coprocessor 1245. In another embodiment, processors 1370 and 1380 are respectively processor 1210 coprocessor 1245.

Processors 1370 and 1380 are shown including integrated memory controller (IMC) hardware 1372 and 1382, respectively. Processor 1370 also includes as part of its bus controller hardware point-to-point (P-P) interfaces 1376 and 1378; similarly, second processor 1380 includes P-P interfaces 1386 and 1388. Processors 1370, 1380 may exchange information via a point-to-point (P-P) interface 1350 using P-P interface circuits 1378, 1388. As shown in Figure 13, IMCs 1372 and 1382 couple the processors to respective memories, namely a memory 1332 and a memory 1334, which may be portions of main memory locally attached to the respective processors.

Processors 1370, 1380 may each exchange information with a chipset 1390 via individual P-P interfaces 1352, 1354 using point to point interface circuits 1376, 1394, 1386, 1398. Chipset 1390 may optionally exchange information with the coprocessor 1338 via a high-performance interface 1339. In one embodiment, the coprocessor 1338 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 1390 may be coupled to a first bus 1316 via an interface 1396. In one embodiment, first bus 1316 may be a Peripheral Component Interconnect (PCI) bus, or a bus such as a PCI Express bus or another third generation I/O interconnect bus, although the scope of the present invention is not so limited.

As shown in Figure 13, various I/O devices 1314 may be coupled to first bus 1316, along with a bus bridge 1318 which couples first bus 1316 to a second bus 1320. In one embodiment, one or more additional processor(s) 1315, such as coprocessors, high-throughput MIC processors, GPGPU's, accelerators (such as, e.g., graphics accelerators or digital signal processing (DSP) hardware), field programmable gate arrays, or any other processor, are coupled to first bus 1316. In one embodiment, second bus 1320 may be a low pin count (LPC) bus. Various devices may be coupled to a second bus 1320 including, for example, a keyboard and/or mouse 1322, communication devices 1327 and a storage hardware 1328 such as a disk drive or other mass storage device which may include instructions/code and data 1330, in one embodiment. Further, an audio I/O 1324 may be coupled to the second bus 1320. Note that other architectures are possible. For example, instead of the point-to-point architecture of Figure 13, a system may implement a multi-drop bus or other such architecture.

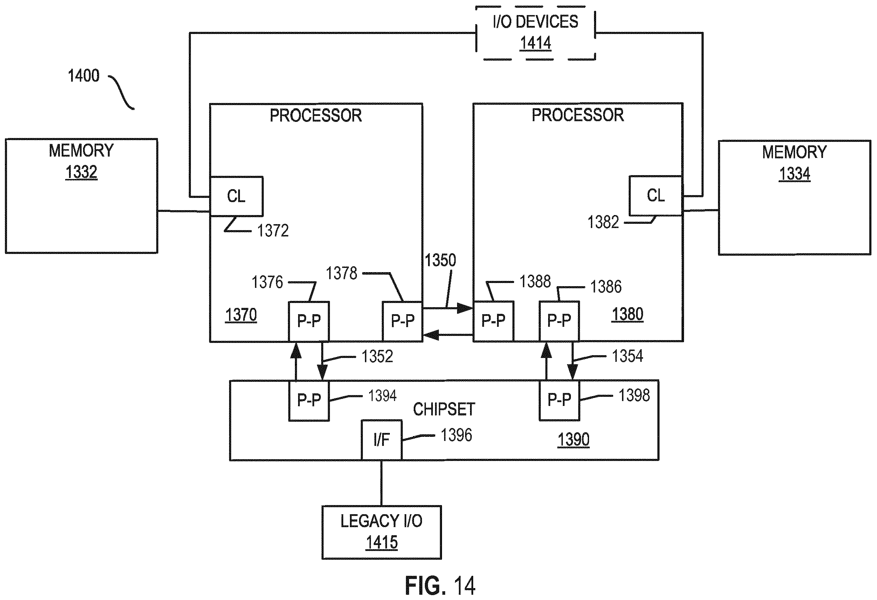

Referring now to **Figure 14****,** shown is a block diagram of a second more specific exemplary system 1400 in accordance with an embodiment of the present invention. Like elements in Figures 13 and 14 bear like reference numerals, and certain aspects of Figure 13 have been omitted from Figure 14 in order to avoid obscuring other aspects of Figure 14.

Figure 14 illustrates that the processors 1370, 1380 may include integrated memory and I/O control logic ("CL") 1372 and 1382, respectively. Thus, the CL 1372, 1382 include integrated memory controller hardware and include I/O control logic. Figure 14 illustrates that not only are the memories 1332, 1334 coupled to the CL 1372, 1382, but also that I/O devices 1414 are also coupled to the control logic 1372, 1382. Legacy I/O devices 1415 are coupled to the chipset 1390.

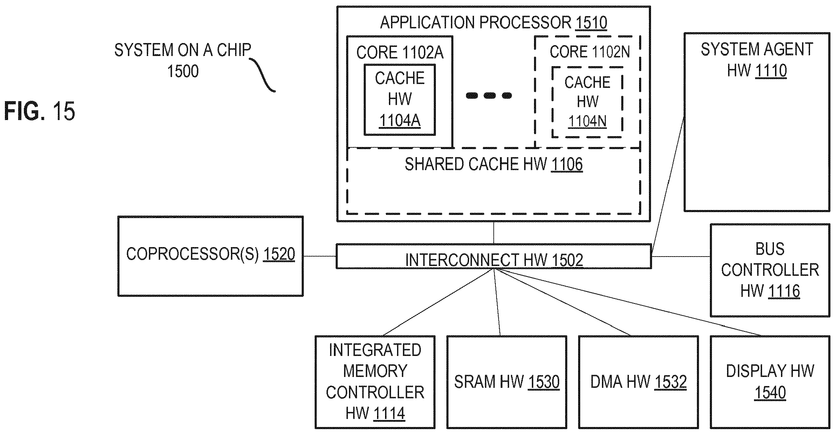

Referring now to **Figure 15****,** shown is a block diagram of a SoC 1500 in accordance with an embodiment of the present invention. Similar elements in Figure 11 bear like reference numerals. Also, dashed lined boxes are optional features on more advanced SoCs. In Figure 15, an interconnect hardware 1502 is coupled to: an application processor 1510 which includes a set of one or more cores 1102A-N and shared cache hardware 1106; a system agent hardware 1110; a bus controller hardware 1116; an integrated memory controller hardware 1114; a set or one or more coprocessors 1520 which may include integrated graphics logic, an image processor, an audio processor, and a video processor; an static random access memory (SRAM) hardware 1530; a direct memory access (DMA) hardware 1532; and a display hardware 1540 for coupling to one or more external displays. In one embodiment, the coprocessor(s) 1520 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Program code, such as code 1330 illustrated in Figure 13, may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

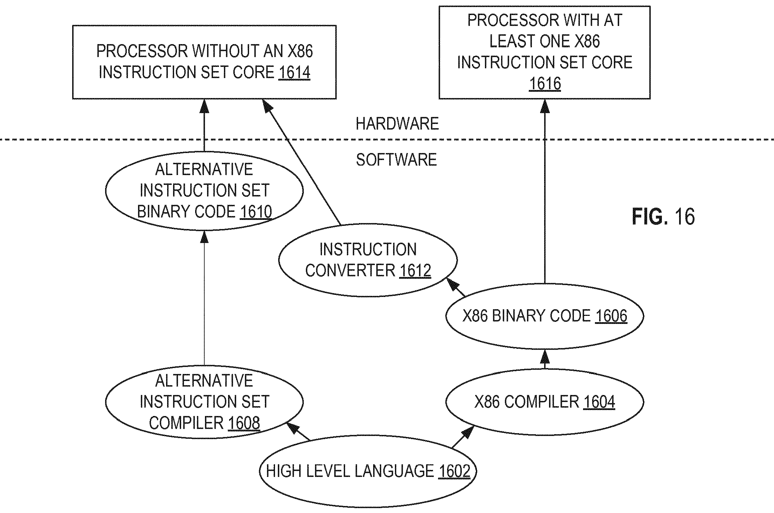

**Figure 16** is a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. Figure 16 shows a program in a high level language 1602 may be compiled using an x86 compiler 1604 to generate x86 binary code 1606 that may be natively executed by a processor with at least one x86 instruction set core 1616. The processor with at least one x86 instruction set core 1616 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 1604 represents a compiler that is operable to generate x86 binary code 1606 (e.g., object code) that can, with or without additional linkage processing, be executed on the processor with at least one x86 instruction set core 1616. Similarly, Figure 16 shows the program in the high level language 1602 may be compiled using an alternative instruction set compiler 1608 to generate alternative instruction set binary code 1610 that may be natively executed by a processor without at least one x86 instruction set core 1614 (e.g., a processor with cores that execute the MIPS instruction set of MIPS Technologies of Sunnyvale, CA and/or that execute the ARM instruction set of ARM Holdings of Sunnyvale, CA). The instruction converter 1612 is used to convert the x86 binary code 1606 into code that may be natively executed by the processor without an x86 instruction set core 1614. This converted code is not likely to be the same as the alternative instruction set binary code 1610 because an instruction converter capable of this is difficult to make; however, the converted code will accomplish the general operation and be made up of instructions from the alternative instruction set. Thus, the instruction converter 1612 represents software, firmware, hardware, or a combination thereof that, through emulation, simulation or any other process, allows a processor or other electronic device that does not have an x86 instruction set processor or core to execute the x86 binary code 1606.

## Claims

1. A method of data movement operations comprising:
storing (702) a cache line in a first cache of a first processor, the cache line associated with a cache coherence state indicating that the first cache has sole ownership of the cache line;
tracking accesses to the cache line (708) by monitoring executions of a snapshot instruction made by a second processor, the snapshot instruction specifying a memory address of the cache line, wherein an execution of the snapshot instruction (706) cause the second processor to read data from the cache line stored in the first cache without changing the cache coherence state associated with the cache line, the cache line is to remain in the first cache after the read; and
controlling enablement of a load operation (708) based on the tracked accesses when the monitored executions exceed a certain number, wherein an enablement of the load operation is to cause 1) a copy of the cache line to be stored into a second cache of the second processor, and 2) the cache coherence state of the cache line in the first cache to be changed to shared.

2. The method of claim 1, further comprising using a table (525) to track accesses to the cache line, wherein a table entry (610-1) corresponding the cache line stores a count of a number of accesses to the cache line made by the first processor via executions of the snapshot instruction by the second processor.

3. The method of claim 2, further comprising incrementing the count each time (803) the cache line is accessed by the second processor via execution of the snapshot instruction by the second processor.

4. The method of claim 3, further comprising enabling the load operation when the count exceeds a first threshold.

5. The method of claim 4, further comprising decrementing the count (904)each time a predetermined amount of time has passed.

6. The method of claim 5, further comprising deleting the table entry corresponding to the cache line when the count falls below a second threshold.

7. The method of any one of claims 2-6, further comprising hashing the memory address of the cache line to determine the corresponding table entry for the cache line.

8. The method of any one of claims 1-7, further comprising storing the copy of the cache line into the second cache as least recently used (LRU) so that the copy of the cache line is more likely to be evicted from the second cache than other cache lines in the second cache.

9. The method of any one of claims 1-7, further comprising issuing a prefetch instruction specifying a cache level into which the copy of the cache line is to be stored, and executing the prefetch instruction to store the copy of the cache line into the specified cache level.

10. An apparatus comprising means to perform a method as claimed in any preceding claim.

11. Machine-readable storage including machine-readable instructions which, when executed by a processing machine, cause the processing machine to implement a method as claimed in any of claims 1-9.

## Patentansprüche

1. Verfahren von Datenbewegungsoperationen, das Folgendes umfasst:
Speichern (702) einer Cache-Zeile in einem ersten Cache eines ersten Prozessors, wobei die Cache-Zeile mit einem Cache-Kohärenzzustand assoziiert ist, der angibt, dass der erste Cache alleinige Rechte über die Cache-Zeile aufweist;
Verfolgen von Zugriffen auf die Cache-Zeile (708) durch Überwachen von durch einen zweiten Prozessor vorgenommenen Ausführungen einer Schnappschussanweisung, wobei die Schnappschussanweisung eine Speicheradresse der Cache-Zeile vorgibt, wobei eine Ausführung der Schnappschussanweisung (706) den zweiten Prozessor veranlasst zum Lesen von Daten der in dem ersten Cache gespeicherten Cache-Zeile, ohne den mit der Cache-Zeile assoziierten Cache-Kohärenzzustand zu ändern, wobei die Cache-Zeile nach dem Lesen in dem ersten Cache verbleiben muss; und
Steuern einer Freigabe einer Ladeoperation (708) auf der Grundlage der verfolgten Zugriffe, wenn die überwachten Ausführungen eine gewisse Anzahl übersteigen, wobei eine Freigabe der Ladeoperation veranlassen soll, dass 1) eine Kopie der Cache-Zeile in einem zweiten Cache des zweiten Prozessors gespeichert wird und 2) der Cache-Kohärenzzustand der Cache-Zeile in dem ersten Cache auf gemeinsam-genutzt geändert wird.

2. Verfahren nach Anspruch 1, ferner umfassend Verwenden einer Tabelle (525) zum Verfolgen von Zugriffen auf die Cache-Zeile, wobei ein der Cache-Zeile entsprechender Tabelleneintrag (610-1) eine Zählung einer Anzahl von Zugriffen auf die Cache-Zeile speichert, die durch den ersten Prozessor über Ausführungen der Schnappschussanweisung durch den zweiten Prozessor vorgenommen werden.

3. Verfahren nach Anspruch 2, ferner umfassend Inkrementieren der Zählung jedes Mal (803), wenn durch den zweiten Prozessor über Ausführung der Schnappschussanweisung durch den zweiten Prozessor auf die Cache-Zeile zugegriffen wird.

4. Verfahren nach Anspruch 3, ferner umfassend Freigeben der Ladeoperation, wenn die Zählung eine erste Schwelle übersteigt.

5. Verfahren nach Anspruch 4, ferner umfassend Dekrementieren der Zählung (904) jedes Mal, wenn eine vorbestimmte Zeitspanne vergangen ist.

6. Verfahren nach Anspruch 5, ferner umfassend Löschen des der Cache-Zeile entsprechenden Tabelleneintrags, wenn die Zählung unter eine zweite Schwelle fällt.

7. Verfahren nach einem der Ansprüche 2-6, ferner umfassend Hashen der Speicheradresse der Cache-Zeile, um den entsprechenden Tabelleneintrag für die Cache-Zeile zu bestimmen.

8. Verfahren nach einem der Ansprüche 1-7, ferner umfassend Speichern der Kopie der Cache-Zeile in den zweiten Cache als Am-Längsten-nicht-verwendet bzw. "least recently used", LRU, so dass die Kopie der Cache-Zeile mit höherer Wahrscheinlichkeit aus dem zweiten Cache rausgeworfen wird als andere Cache-Zeilen in dem zweiten Cache.

9. Verfahren nach einem der Ansprüche 1-7, ferner umfassend Ausgeben einer Prefetch-Anweisung, die einen Cache-Level, in den die Kopie der Cache-Zeile gespeichert werden soll, vorgibt, und Ausführen der Prefetch-Anweisung, um die Kopie der Cache-Zeile in den vorgegebenen Cache-Level zu speichern.

10. Einrichtung, die Mittel zum Durchführen eines Verfahrens nach einem vorhergehenden Anspruch umfasst.

11. Maschinenlesbare Ablage, die maschinenlesbare Anweisungen beinhaltet, die bei Ausführung durch eine Verarbeitungsmaschine die Verarbeitungsmaschine veranlasst zum Implementieren eines Verfahrens nach einem der Ansprüche 1-9.

## Revendications

1. Procédé d'exécution d'opérations de mouvement de données comprenant :
le stockage (702) d'une ligne de cache dans un premier cache d'un premier processeur, cette ligne de cache étant associée à un état de cohérence de cache indiquant que le premier cache a la propriété exclusive de cette ligne de cache ;
le suivi des accès à la ligne de cache (708) en surveillant les exécutions d'une instruction d'instantané faite par un deuxième processeur, cette instruction d'instantané spécifiant une adresse de mémoire de la ligne de cache, une exécution de cette instruction d'instantané (706) faisant lire au deuxième processeur des données venant de la ligne de cache stockée dans le premier cache sans changer l'état de cohérence de cache associé à la ligne de cache, la ligne de cache devant rester dans le premier cache après la lecture ; et
la commande de l'activation d'une opération de chargement (708) en se basant sur les accès suivis lorsque les exécutions surveillées dépassent un certain nombre, une activation de cette opération de chargement devant entraîner 1) le stockage d'une copie de la ligne de cache dans un deuxième cache du deuxième processeur, et 2) le changement de l'état de cohérence de cache de la ligne de cache dans le premier cache à 'partagé'.

2. Procédé selon la revendication 1, comprenant en outre l'utilisation d'une table (525) pour suivre les accès à la ligne de cache, une entrée de table (610-1) correspondant à la ligne de cache stockant un compte d'un nombre d'accès à la ligne de cache faits par le premier processeur au moyen d'exécutions de l'instruction d'instantané par le deuxième processeur.

3. Procédé selon la revendication 2, comprenant en outre l'incrémentation du compte chaque fois (803) que le deuxième processeur accède à la ligne de cache au moyen de l'exécution de l'instruction d'instantané par le deuxième processeur.

4. Procédé selon la revendication 3, comprenant en outre l'activation de l'opération de chargement lorsque le compte dépasse un premier seuil.

5. Procédé selon la revendication 4, comprenant en outre la décrémentation du compte (904) chaque fois qu'une quantité prédéterminée de temps s'est écoulée.

6. Procédé selon la revendication 5, comprenant en outre la suppression de l'entrée de table correspondant à la ligne de cache lorsque le compte tombe en dessous d'un deuxième seuil.

7. Procédé selon l'une quelconque des revendications 2 à 6, comprenant en outre le hachage de l'adresse de mémoire de la ligne de cache de façon à déterminer l'entrée de table correspondante pour la ligne de cache.

8. Procédé selon l'une quelconque des revendications 1 à 7, comprenant en outre le stockage de la copie de la ligne de cache dans le deuxième cache tel qu'utilisé le moins récemment (LRU) de manière à ce que la copie de la ligne de cache soit plus susceptible d'être expulsée du deuxième cache que d'autres lignes de cache dans le deuxième cache.

9. Procédé selon l'une quelconque des revendications 1 à 7, comprenant en outre l'émission d'une instruction de pré-chargement spécifiant un niveau de cache dans lequel la copie de la ligne de cache doit être stockée, et l'exécution de cette instruction de pré-chargement pour stocker la copie de la ligne de cache dans le niveau de cache spécifié.

10. Appareil comprenant un moyen pour exécuter un procédé selon l'une quelconque des revendications précédentes.

11. Mémoire de stockage lisible par machine comprenant des instructions lisibles par machine, qui, lorsqu'elles sont exécutées par une machine de traitement, font en sorte que cette machine de traitement exécute un procédé selon l'une quelconque des revendications 1 à 9.
